# EUROPEAN PATENT APPLICATION

(11) **EP 3 143 878 A1**
(43) Date of publication of application: **22.03.2017**
(21) Application number: 15186034.3
(22) Date of filing: 21.09.2015
(51) Int. Cl.: A22C 29/00, A23L 7/196, A23P 10/10, A23L 13/00, A23L 13/40

(54) **STUFFED MUSSELS AND PRODUCTION METHOD OF SAID STUFFED MUSSELS**

(71) Applicant: Yayman, Ugur, Manisa (TR)
(72) Inventor: YAYMAN, Ugur, MANISA (TR); YAYMAN, Ugur, MANISA (TR)
(74) Representative: Dereligil, Ersin

(57) **Abstract**

The invention relates to stuffed mussels made by adding cooked rice into the mussel shell that comprises mussel meat in order to change the way of consumption of mussels, which contain omega-3 and omega-6 fatty acids that are significant for human nutrition and growth, and in which said cooked rice comprises rice, onion, vegetable oil, and meat product(s), and it also relates to the production method of said stuffed mussels.

## Description

### The Related Art

The invention relates to stuffed mussels formed by adding meat and cooked rice into mussel shells and zested with various flavours and ingredients in order to change the way of consumption of mussels, which contain omega-3 and omega-6 fatty acids that are significant for human nutrition and growth, and also relates to the production method of said stuffed mussels.

Said stuffed mussels comprise mussels, rice, onion, and vegetable oil. The present invention comprises at least one kind of spice and at least one flavouring material for obtaining different tastes. Said flavouring material is selected from the group consisting of meats of seafood, poultry and hunting animals, or bovine or ovine animals etc. materials.

### The Prior Art

Nowadays, it is known that water products are not consumed as much as meat and chicken. However, water products are highly beneficial and essential for nutrition, and are considered as rare dietary natural products. They contain high amount of proteins and contain the amino acids that are significant for human nutrition and growth in a well-balanced manner. Since they are easily digested, water products can be freely consumed by people of all ages. In recent years, consumers also adopt the idea that a diet rich in unsaturated fatty acids is healthier, and therefore avoid saturated fatty acids more and more. Water products have great significance in terms of human nutrition, since they contain high levels of unsaturated fatty acids and contain omega-3 and omega-6 fatty acids. Besides, they also contain the minerals and vitamins essential for growth.

Mussel meat is a good nutritional source sharing the above given characteristics with the other seafood products. Mussel meat has high unsaturated fatty acids; low saturated fatty acids; and it is also a source of omega-3 fatty acids, which are mentioned most often in recent years. Omega fatty acids are known to be beneficial for various diseases. Moreover, mussel meat is also known to contain essential amino acids in a ratio of 9%.

When mussel is eaten alone, the taste obtained is due to the part forming the internal organs of the mussel instead of mussel meat. The part forming the internal organs of a mussel is a greenish part, which is found at the front side of mussel meat. When the internal organ parts of a mussel are separated from mussel meat, the meat of the mussel does not leave the commonly known taste on the palates of consumers. The taste of mussel meat without internal organs is dull. Therefore, mussel meat is presented to consumers with various flavouring and baking techniques.

In the known status of the art, mussels can be prepared as salted, marinated, jellied, smoked, and conserved, as well as being used in a mussel salad or cocktail. Besides, mussels are mostly consumed by being baked and/or fried on pan.

In the literature, the application no KR100260406 is encountered about the subject. The application discloses a mussel food. Sesame oil, soybean sauce, mussel, and rice are used in the relevant food.

Since hunting and serving of mussels are difficult and costly in the prior art, its consumption is much lower than targeted consumption.

As a result, the above said drawbacks and the inadequacy of the prior solutions about the subject have necessitated improvement in the related technical field.

### Purpose of the Invention

The present invention relates to stuffed mussels and production method of said stuffed mussels, which meet the above said requirements, eliminate all of the drawbacks and bring about some additional advantages.

The purpose of the invention is to promote consumption of mussels that contain omega-3 and omega-6 fatty acids, which are significant for human nutrition and growth.

The purpose of the invention is to make mussels tastier.

A purpose of the invention is to produce stuffed mussels that can be served quickly and easily.

The purpose of the invention is to provide a new way for mussel consumption.

A purpose of the invention is to produce a new mussel type that appeals to different taste buds.

A purpose of the invention is to provide stuffed mussels zested by addition of at least one kind of spice and at least one flavouring ingredient, in order to obtain different tastes.

In order to achieve the above said advantages, stuffed mussels made with cooked rice filled into mussel shells containing mussel meat are developed; wherein said cooked rice comprises rice, onion, vegetable oil, and meat products.

In order to achieve the above said advantages, stuffed mussels preparing method is developed, which comprises the operation steps of: cleaning the collected mussels and then obtaining mussels that contain mussel meat, opening the obtained mussels, obtaining a mixture by roasting rice and onion in vegetable oil, obtaining cooked rice by baking the obtained mixture after addition of meat products and water, filling said cooked rice into the mussels containing mussel meat, obtain stuffed mussels by closing said mussels, and baking said stuffed mussels with vegetable oil and water.

The structural and characteristic features of the invention and all advantages will be understood better in detailed descriptions with the figures given below and with reference to the figures, and therefore, the assessment should be made taking into account the said figures and detailed explanations.

### Detailed Description of the Invention

In this detailed description, stuffed mussels formed by adding meat and cooked rice into mussel shells and zested with various flavours and ingredients in order to change the way of consumption of mussels, which contain omega-3 and omega-6 fatty acids that are significant for human nutrition and growth, and the production method of said stuffed mussels are disclosed only for better understanding of the subject.

The invention is basically a stuffed mussel that is served by adding cooked rice in between mussel shells comprising boiled mussel meat, wherein the cooked rice is obtained by baking rice together with onions, vegetable oil, and meat products.

**The ingredients of the stuffed mussels according to the invention**

| Ingredient | Preferred Amount by Weight (%) | Usable Amount by Weight (%) |
|---|---|---|
| Rice | 70 | 65-75 |
| Onion | 20 | 10-30 |
| Meat products | 5 | 4-7 |
| Vegetable oil | 3 | 1-5 |
| Spice | 2 | 1-3 |

Meat products can be formed of individual ingredients or combinations thereof selected from the group consisting of the meats of octopus, shrimp, sole fish, atherina, anchovy, caviare, lobster, horse-mackarel, oyster, calamary, turbot, crayfish, sword fish, sea-robbins, shark, angler fish, sardine, salmon, mackerel, crab, and eel etc. seafood, poultry and hunting animals, and bovine or ovine animals.

Spices are individual ingredients are combinations thereof selected from the group consisting of red pepper powder, sage, anise, juniper, white pepper, rosemary, fenugreek, myristica fragrans, nigella, bay leaf, dill, pine nuts, parsley, mustard, poppy seeds, coconut, black pepper, cardamom, garlic, kerbel powder, thyme, cumin, coriander, köftebahari (mixed spices for meatballs), curry, dried tarragon, currants, lemon balm, musk, peppermint, pink pepper, pimpinella, red pepper flakes, fennel, arugula, saffron, sumac, cinnamon, sweet red pepper, watercress, ground cinnamon, vanilla, allspice, ginger, turmeric, Chinese salt (monosodium glutamate), flaxseed, isot pepper, basil, mahaleb, and hibiscus etc. materials.

Said vegetable oil is selected from sunflower oil or olive oil.

In the production method of stuffed mussels; first of all, the surfaces of the mussels are cleaned by a machine with the help of a brush. Quality control is performed on belts. Afterwards, grading is made by means of a machine. Another quality control is performed about the grading. Washing operation is continuously carried on during these stages. After this step, the end parts of the mussels are opened with a knife without separating the shell parts from each other. The hairy parts found within the mussel are removed by hand and the shells are kept in a container filled with water for 15 minutes. Afterwards, the water of the washed mussels is drained and then the mussels are ready to be filled.

Meanwhile, previously cleaned and minced onions are placed in vegetable oil heated in a cooking pot and roasted; and then, a mixture is formed by means of adding rice that is filtered after being conditioned in salty warm water for 20 minutes; and this mixture is roasted for 10 minutes at a low heat while being stirred from bottom to the top. Spices, meat products, and water (mussel juice can also be added besides water) are added into the mixture obtained in the last stage; and cooked rice (pilaf) is obtained after baking the rice at a low heat such that it would remain half-cooked(nearly uncooked).

Afterwards, the mussel shells containing mussel meat are filled with cooked rice as much as can be filled. Prepared stuffed mussels are then arranged on a wide pot such that their wide parts would face down. Vegetable oil and water are poured on the stuffed mussels arranged, and then, they are fully cooked for 25-30 minutes at a low heat while being covered with a porcelain plate. Stuffed mussels made ready for consumption are preferably served with lemon.

The flavour of the cooked rice of stuffed mussels is substantially obtained with the meat products, onion, rice, and due to the way of cooking. Moreover, before eating, the lemon juice squeezed onto stuffed mussels also contributes to the known flavour.

The most significant characteristic of the present invention is; being producable by any person, since it is easy and inexpensive to produce. The cost of stuffed mussels usually sold by piece to the consumers is quite convenient for the general purchase power. Therefore, stuffed mussels can be consumed all the time just like a fast food product. Therefore, stuffed mussels can play a more important role in mussel consumption compared to mussel meat alone.

## Claims

1. A stuffed mussel made by adding cooked rice into the mussel shell that comprises mussel meat, **characterized in that**; said cooked rice comprises rice, onion, vegetable oil, and meat.

2. Stuffed mussels according to Claim 1 **characterized in that**; the cooked rice of said stuffed mussels comprises 65 - 75 % by weight rice, 10 - 30 % by weight onion, 4 - 7 % by weight meat product, and 1 - 5 % by weight vegetable oil.

3. Stuffed mussels according to Claim 1, **characterized in that**; said meat product comprises individual ingredients or combinations thereof selected from the group consisting of the meat of seafood, poultry and hunting animals, and bovine and ovine animals.

4. Stuffed mussels according to Claim 3, and it is **characterized in that**; said seafood products comprises individual ingredients or combinations thereof selected from the group consisting of octopus, shrimp, sole fish, atherina, anchovy, caviare, lobster, horse-mackarel, oyster, calamary, turbot, crayfish, sword fish, sea-robbins, shark, angler fish, sardine, salmon, mackerel, crab, and eel.

5. Stuffed mussels according to Claim 1 **characterized in that**; said cooked rice comprises spice.

6. Stuffed mussels according to Claim 5 **characterized in** comprising spices 1 - 3 % by weight.

7. Stuffed mussels according to Claims 5 or 6, and it is **characterized in that**; said spices are individual spices or combinations thereof selected from the group consisting of red pepper powder, sage, anise, juniper, white pepper, rosemary, fenugreek, myristica fragrans, nigella, bay leaf, dill, pine nuts, parsley, mustard, poppy seeds, coconut, black pepper, cardamom, garlic, kerbel powder, thyme, cumin, coriander, köftebahari (mixed spices for meatballs), curry, dried tarragon, currants, lemon balm, musk, peppermint, pink pepper, pimpinella, red pepper flakes, fennel, arugula, saffron, sumac, cinnamon, sweet red pepper, watercress, ground cinnamon, vanilla, allspice, ginger, turmeric, Chinese salt (monosodium glutamate), flaxseed, isot pepper, basil, mahaleb, and hibiscus etc. materials.

8. Stuffed mussels according to Claim 1, and it is **characterized in that**; said vegetable oil is sunflower oil or olive oil.

9. Stuffed mussels preparation method comprising the operation steps of:
• obtaining mussels with mussel meat after cleaning of the collected mussels,
• opening of the obtained mussels,
• obtaining a mixture by roasting rice and onion on vegetable oil,
**characterized in that**; it also comprises the operation steps of:
• obtaining cooked rice by means of adding meat product and water into the mixture obtained,
• filling of said cooked rice into the mussels comprising mussel meat,
• obtaining stuffed mussels by closing said mussels, and
• baking of said stuffed mussels with vegetable oil and water.

10. Production method according to Claim 9, and it is **characterized in that**; roasting operation takes 15 - 20 minutes.

11. Production method according to Claim 9, and it is **characterized in that**; said conditioning operation takes at least 20 minutes.

12. Production method according to Claim 9, and it is **characterized in that**; the baking operation of stuffed mussels in a cooking pot takes 25 - 30 minutes at 100 °C.
